# EUROPEAN PATENT APPLICATION

(11) **EP 3 879 499 A1**
(43) Date of publication of application: **15.09.2021**
(21) Application number: 20210603.5
(22) Date of filing: 30.11.2020
(51) Int. Cl.: G06T 15/20, G06T 19/00, H04N 13/00

(54) **HOLOGRAPHIC DISPLAY SYSTEM**

(30) Priority: 10.03.2020 ES 202030442 U
(71) Applicant: Brainstorm Multimedia, S.L., 46005 Valencia (ES)
(72) Inventor: MONTESA ANDRÉS, Ricardo, 46005 VALENCIA (ES); MONTESA ANDRÉS, Javier, 46005 VALENCIA (ES)
(74) Representative: Ungria López, Javier

(57) **Abstract**

The invention consists of a holographic display system. More specifically, it relates to a system which, given the position in space from where a scene can be observed that said display is a part of, generates an image powering the display in order to create an invisible display effect for the spectator, in other words, it achieves the optical illusion of seeing through the display. Furthermore, the system is capable of adding to the generated image three-dimensional graphic elements which will seem to float in the space viewed through the display. The system comprises: a display; a video camera; a graphics station, which comprises: a memory, a processor, a graphics engine which, upon rendering a three-dimensional model, gives rise to a transparency effect of the display in the real scene; the graphics station being configured to project on the display the portion of the real scene (8) and a virtual object (9).

## Description

### OBJECT OF THE INVENTION

The invention consists of a holographic display system. More specifically, it relates to a system which, given the position in space from where a scene can be observed that said display is a part of, generates an image powering the display in order to create an invisible display effect for the spectator, in other words, it achieves the optical illusion of seeing through the display. Furthermore, the system is capable of adding to the generated image three-dimensional graphic elements which will seem to float in the space viewed through the display.

### TECHNICAL FIELD

The invention is comprised within the field of audiovisual technologies, including 2D and 3D image processing.

### BACKGROUND OF THE INVENTION

The audiovisual processing of synthetic images, in other words, computer-generated images combining real elements captured by video cameras with virtual elements which are added holographically is known in the state of the art.

However, audiovisual processing systems wherein the projecting element (a display) is simultaneously an integral part of the real scene captured by the video cameras and, in turn, the holographic effect-generating element are not known in the state of the art.

### BRIEF DESCRIPTION OF THE INVENTION

In one aspect of the invention, a holographic display system is disclosed. The holographic display system comprises a display, a video camera, and a graphics station, which is connected at least with the display and with the video camera. The graphics station comprises a memory wherein a three-dimensional model replica of a real scene is stored wherein at least the display and the video camera are positioned. Additionally, the graphics station comprises a processor configured to calculate a relative position between the display and the video camera starting from the 3D coordinates of a position and an orientation of the display and from the 3D coordinates of a position and an orientation of the video camera. Additionally, the graphics station comprises a graphics engine which, upon rendering the three-dimensional model, calculates a portion of the real scene which, shown on the display, gives rise to a transparency effect of the display in the real scene. The graphics station is configured to project on the display the portion of the real scene and a virtual object.

The graphics station enables one or more virtual objects to be added that will appear as graphics with a holographic effect on the display.

The portion of the real scene on the three-dimensional model is calculated taking into account that the portion of the real scene is shown on the display, and that the display is viewed from the point in space wherein the video camera is located.

If the display and/or the video camera are kept stationary over time, it is possible to manually supply the 3D coordinates of the position and orientation of the display and/or video camera in order for the processor to calculate the relative position between display and video camera.

Optionally, if the display and the video camera are kept stationary over time or if there is a variation in position and/or orientation between display and video camera, the holographic display system may comprise a display tracking device providing the 3D coordinates of the position and of the orientation of the display, and a video camera tracking device providing the 3D coordinates of the position and of the orientation of the video camera. The display tracking device and the video camera tracking device are connected to the graphics station so that the processor can calculate the relative position between the display and the video camera.

The graphics station may additionally comprise a graphics card with video output in order to connect the graphics station to the display.

The processor is configured to calculate the portion of the real scene corresponding to the display by means of a calculation based on a truncated pyramid with one of the vertexes thereof wherein the video camera from where the rendering will be performed is located and a rectangular base corresponding to the projection plane on which said rendering is projected. The memory may additionally store at least one virtual object so that the processor shows the virtual object on the display floating with a holographic appearance over the scene.

Moreover, the three-dimensional model replica of the real scene is a model based on architectural plans, an artistic recreation, or photogrammetric methods.

Throughout the present description, the term "connected" can mean that the elements that are "connected" can share an electrical connection for powering and/or data connection for communicating between both elements. The data connection can be unidirectional or bidirectional. Alternatively or additionally, the term "connected" can mean that the elements that are "connected" can be "mechanically" joined by one or more parts of each element.

### BRIEF DESCRIPTION OF THE FIGURES

In order to help with a better understanding of the features of the invention and to complement this description, the following figures are attached as an integral part of the same, by way of illustration and not limitation:
Figure 1 shows the system of the present invention wherein the display shows the content of the real scene positioned behind the display.
Figure 2 shows the system of the present invention wherein the display shows the content of the real scene positioned behind the display and additionally a virtual object.
Figure 3 shows a first plane of the display comprised in the present invention with elements contained in the real scene positioned behind the display and additionally a virtual object.
Figure 4 shows a block diagram of the holographic display system of the present invention.

### DETAILED DESCRIPTION OF AN EXEMPLARY EMBODIMENT

### List of reference numbers:

1.- Holographic display system.
2.- Display.
3.- Video camera.
4.- Graphics station.
   4.1.- memory
   4.2.- processor
   4.3.- graphics card
   4.4.- Inputs/Outputs
   4.5.- Operating System
   4.6.- Graphics engine
5.- Display tracking device.
6.- Video camera tracking device.
7.- Three-dimensional model.
8.- Real scene.
9.- Virtual object.

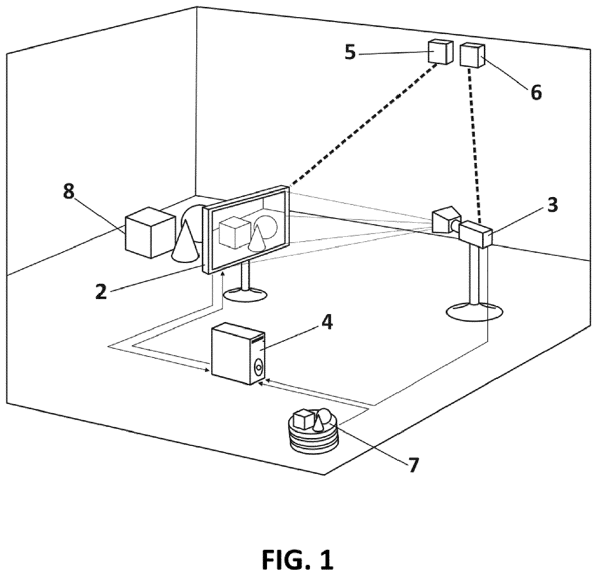

The basic functionality of the holographic display system of the present invention consists of, given a position in space from where a real scene 8 can be observed that the display 2 is a part of, generating an image on the display 2 itself, creating an "invisible display" effect for the spectator, in other words, it achieves the optical illusion of seeing through it (Figure 1).

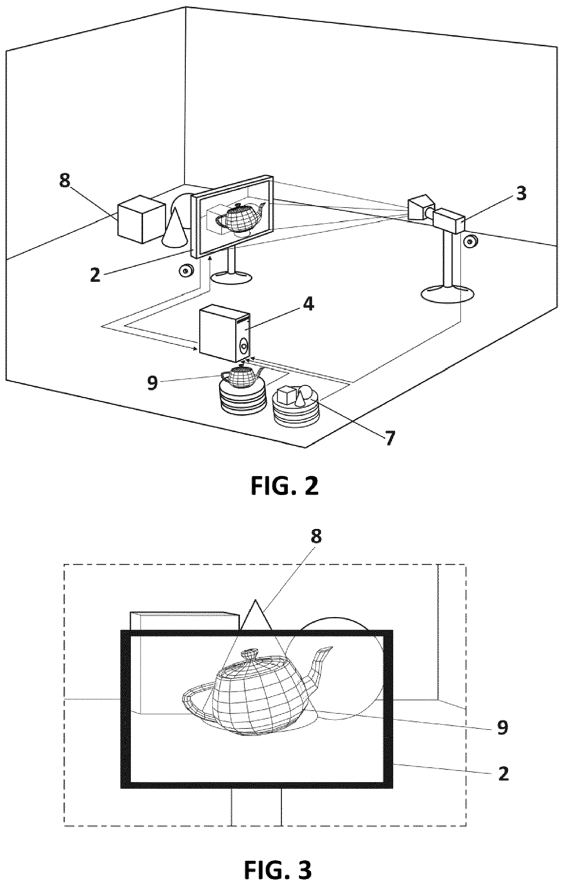

Additionally, and given that the image generated in the display is synthetic, it is possible to include in said three-dimensional image graphic elements 9 which will seem to float in the space viewed through the display (Figure 2 and Figure 3).

For the holographic display system to suitably operate, only two premises are needed:
1. First, the position of the video camera or spectator must be known with precision.
2. Second, the position and size of the display, or in other words the four corners thereof, must also be known with precision.

The positioning of the video camera 3 and of the display 2 can be recorded by measuring them directly if they are fixed, or capturing them in time real using the video camera tracking device 6 and the display tracking device 5, such as "Mosys," "Trackmen," "Vive Tracker" or the like.

Based on this information and using a graphics engine 4.6 comprised in the graphics station 4 rendering a virtual model replica of the real scene 8 behind the display, it is possible to calculate the image that would be needed to be shown on the display in order to obtain the transparency effect and holography of 3D elements.

To do so, the positions of both the point wherein the video camera 3 or spectator (optical nodal point) is located and the positions of the four corners of the display 2 are needed. This information is used to directly derive the frustum defining the perspective of the scene required (Figure 1).

Given that this information may vary as the camera (and even the display) moves, the tracking devices must communicate in time real to the graphics engine 4.6 the positions of said physical elements (display 2 and video camera 3) from which the mentioned frustum is obtained, the resulting render of which is used to power the display 2, also in time real, so as to finally obtain the mentioned "invisibility" effect.

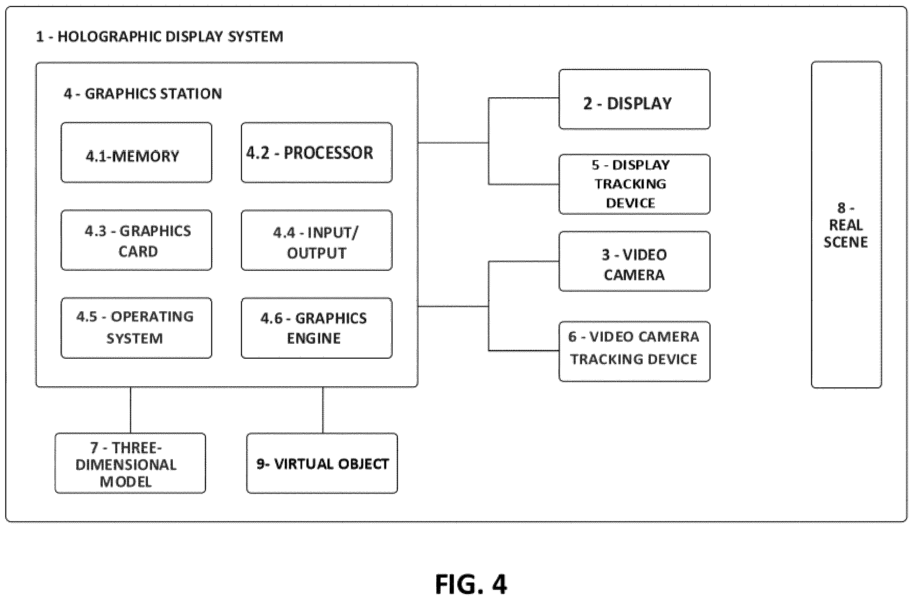

Lastly, Figure 4 shows a block diagram of the holographic display system of the present invention. The holographic display system 1 comprises the graphics station 4 wherein the graphics engine 4.6 is run. Connected to this graphics station 4 are, by means of Input/Output ports 4.4, first the video camera tracking device 6 and the display tracking device 5. Both the video camera tracking device 6 and the display tracking device 5 supply the position and orientation of the video camera 3 and the display 2, respectively. Additionally, the video output 4.4 of the graphics card 4.3 comprised in the graphics station 4 is connected to the input corresponding to the display 2. Additionally, the graphics station 4 comprises the memory 4.1 and the processor 4.2. The memory 4.1 stores the operating system 4.5, the graphics engine 4.6, the three-dimensional model of the scene 7, and the virtual objects 9 required. The three-dimensional model of the scene 7 is a replica of the real scene 8 that will be rendered in the graphics station 4 from the position wherein the video camera is located 3 for the viewing thereof on the display 2. The methods for achieving the three-dimensional model 7 may be based on architectural plans of the location, an artistic recreation or photogrammetric methods.

From the configuration shown in Figure 4 and from the three-dimensional model of the scene 7, the system of the present invention is capable of calculating the portion of the scene that needs to be shown on the display 2 so that, when viewed from the point in space wherein the video camera 3 is located (supplied by the tracking system), it produces the desired invisibility effect, in other words, and the spectator can see through the display what is behind it.

In the graphics engines 4.6, the mechanism for determining which part of the scene will be rendered on the display and how it will be done involves a very particular concept called a frustum. It is a truncated pyramid with a vertex wherein the video camera 3 is located and a rectangular base corresponding to the projection plane.

The relationship between any possible relative position between video camera 3 and display 2, and the render needed to obtain the invisibility effect may be established through the frustum and has a one-to-one correspondence. Furthermore, with the frustum having been defined, the graphics engine 4.6 has the programming API needed to establish the render parameters of the scene that will directly result in the image shown on the display 2.

Furthermore, once the invisibility effect has been achieved, if the operator of the holographic display system of the present invention needs to view additional virtual objects 9 on the display 2 (stock market graphs, sports results, etc.), this can be done by simply adding them to the original scene object of the render. To do so, graphics engines offer a number of tools given that this is their object and functionality.

## Claims

1. A holographic display system (1), **characterised in that** it comprises:
• a display (2);
• a video camera (3);
• a graphics station (4) connected to at least the display (2) and to the video camera (3);
wherein the graphics station (4) comprises at least:
• a memory (4.1) wherein a three-dimensional model (7) replica of a real scene (8) is stored where at least the display (2) and the video camera (3) are positioned;
• a processor (4.2) configured to calculate a relative position between the display (2) and the video camera (3) starting from 3D coordinates of a position and an orientation of the display (2) and from 3D coordinates of a position and an orientation of the video camera (3); and,
• a graphics engine (4.6) which, upon rendering the three-dimensional model (7), calculates a portion of the real scene (8) which, shown on the display (2), gives rise to a transparency effect of the display (2) in the real scene (8);
the graphics station (4) being configured to project on the display (2) the portion of the real scene (8) and a virtual object (9).

2. The holographic display system according to claim 1, wherein it further comprises:
• a display tracking device (5) providing the 3D coordinates of the position and of the orientation of the display (2); and,
• a video camera tracking device (6) providing the 3D coordinates of the position and of the orientation of the video camera (3).

3. The holographic display system according to claim 1, wherein the graphics station (4) further comprises a graphics card (4.3) with video output for connecting the graphics station to the display.

4. The holographic display system according to claim 1 wherein the three-dimensional model (7) is a model based on architectural plans, an artistic recreation, or photogrammetric methods.

5. The holographic display system according to claim 1, wherein the processor (4.2) is configured to calculate the portion of the real scene (8) by means of a calculation based on a truncated pyramid with one of the vertexes thereof wherein the video camera (3) is located and a rectangular base corresponding to the projection plane.
